(19)

Europäisches
Patentamt
European
Patent Office
Office européen
des brevets

(11) **EP 2 098 122 A1**

(12) **EUROPEAN PATENT APPLICATION**

(43) Date of publication:
**09.09.2009 Bulletin 2009/37**

(51) Int Cl.:
***A23J 1/20*** (2006.01)

(21) Application number: **08101805.3**

(22) Date of filing: **20.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nestec S.A.**
**1800 Vevey (CH)**

(72) Inventors:
• **Faure, Magali**
**1074, MOLLIE-MARGOT (CH)**

• **Bovetto, Lionel**
**74500, LARRINGES (FR)**
• **Montavon, Philippe**
**1112, ECHICHENS (CH)**
• **Schmitt, Christophe**
**1077, SERVION (CH)**

(74) Representative: **Marquardt, Ulf**
**Nestec S.A.**
**Avenue Nestlé 55**
**1800 Vevey (CH)**

(54) **Proteose Peptone Fraction**

(57) The present invention generally relates to compositions comprising the proteose peptone fraction (PPf). In particular, the present invention relates to a method for the production of an extract comprising a demineralised protein fraction depleted in β-lactoglobulin and enriched in the PPf and to uses of these extracts, e.g. in a food product, a food supplement, a nutritional, a pharmaceutical and/or a cosmetic composition, for example as emulsifier or as foaming agent. The PPf fraction of the present invention may be obtained by adjustment of the pH of an aqueous native protein dispersion to about 5.6 to 8.4, or to about 3.5 to 5.0, heating the aqueous native protein dispersion to about 70-95 °C for about 10 seconds to 60 minutes, removing at least a part of the formed solid large molecular weight aggregates with a diameter of at least 100nm from the aqueous protein dispersion after heating and collecting the remaining liquid fraction of the dispersion.

EP 2 098 122 A1

**Description**

The present invention generally relates to compositions comprising the proteose peptone fraction (PPf). In particular, the present invention relates to a method for the production of an extract comprising a demineralised protein fraction depleted in β-lactoglobulin and enriched in the PPf and uses of these extracts.

Despite the fact that foaming is a typical feature of milk proteins, it is known that milk still conveys considerable surface activity after the removal of caseins, α-lactalbumin and β-lactoglobulin (R. Aschaffenburg, J. Dairy Res. 14 (1945), 316-328). The remaining fraction contains the proteose peptone fraction (PPf), which comprises a significant amount of surface-active components.

The PPf represent a heterogeneous mixture of poorly characterized proteinaceous compounds which are summarized in a review of the subject by Girardet et al., J. Dairy Res. 63 (1996), 333-350, which is incorporated herein by reference.

A number of proteins were described in the PPf, such as β-lactoglobulin, α-lactalbumin and β- and $α_{s1}$-caseins and serum albumin. Two glycoproteins, pp16k and pp20k, with a binding affinity for the enterotoxin of *Escherichia coli* were identified as glycosylated forms of α-lactalbumin and of β-lactoglobulin, respectively. Osteopontin, an acidic 60 kDa phospho-glycoprotein, and the 88 kDa lactoferrin are among the larger proteins detected by sodium dodecyl sulfate polyacrylamide gel electrophoresis (SDS-PAGE).

The amounts of the main PPf components in a sample of milk, designated as components 3, 5 and 8 (PP3, PP5, PP8), are correlated with its plasmin activity. The following components are a result of plasmin activity on β-casein: PP5 or β-CN-5P f (1-105/7; N-terminal peptides 1-105 and 1-107 from β-casein), PP8-fast or β-CN-4P f (1-28; N-terminal peptide 1-28 of β-casein). Components PP8-slow and β-CN-1P f (29-105/7; N-terminal peptides 29-105 and 29-107 of β-casein) are separate entities that are difficult to differentiate by electrophoretic mobility.

The heterogeneous molecular structure of the PP3 components is illustrated by the following observations. PP3 phosphoglycoproteins form complexes with a size of 163 kDa (as measured by ultracentrifugation at pH 8.6) that can be dissociated into subunits with an apparent MW of 40 kDa using 5 M-guanidine. SDS-PAGE, when performed in the presence of the disulfide bond reducing agent 2-mercaptoethanol, revealed the presence of two major glycoprotein components of 24.6-33.4 kDa and 17-20.9 kDa, respectively. The main glycoproteins with an apparent molecular weight of 28 kDa and 18 kDa were virtually always observed and found to be associated with a band at 11 kDa. When resolved by two-dimensional polyacrylamide gel electrophoresis (2D-PAGE), they appear, respectively, as 4 and 2 spots, with apparent isoelectric points ranging from pH 4.9 to 6.1. The complex is composed of glycoproteins with molecular weights of 28 kDa, 18 kDa and 11 kDa, associated with non-glycosylated polypeptides with a molecular weight of about 7 kDa. Separation by lectin affinity chromatography with Concanavaline A (ConA), reveals a complex behaviour of the 11-, 18- and 28 kDa glycoproteins. The 11 kDa glycoprotein does not bind to ConA, whereas the larger 18 and 28 kDa forms were distributed between the non-binding fraction (called glycoproteins pp18$^-$ and pp28$^-$) and the binding fraction (called glycoproteins pp18$^+$ and pp28$^+$).

The PPf is obtained in the art from skimmed milk.

However, isolation of the PPf from skimmed milk involves a heat treatment (e.g., 10 min at 90°C) and acidification of the milk to remove caseins and the denatured whey proteins by precipitation/centrifugation. This conventional approach is very expensive and non applicable at an industrial scale.

The object of the present invention was, hence, to provide the art with a method to obtain the PPf, which can be applied industrially. It was a further object of the present invention to provide the art with a PPf-enriched extract that exhibits a different protein composition than the PPf isolated from milk and which offers superior properties and additional benefits.

The present inventors were surprised to see that these objects can be achieved by a method in accordance with claim 1, by a composition in accordance with claim 14, by a use in accordance with claim 17 and by a product in accordance with claim 21.

The present inventors found that if a PPf-enriched extract is produced from a demineralised protein fraction, for example from a demineralised globular protein fraction , in particular from a whey protein concentrate (WPC) or whey protein isolate (WPI) as opposed to skimmed milk, the object of the present invention is achieved, when the method of the present invention is applied.

The very specific method of the present invention allows the production of an extract with particular beneficial properties.

The resulting extract is - for example - heat stable, and contains acido-soluble and - insoluble proteins.

Additionally, whey is an unexpensive raw material, being usually a waste product of e.g., cheese production. The process of cheese making requires the addition of rennet, a proteolytic enzyme that coagulates the milk, causing it to separate into a curd (future cheese) and a soluble whey fraction.

Milk - in contrast - is an expensive raw material.

Furthermore, since WPIs are almost fat-free, fat removal becomes obsolete during the production of the PPf according to our invention, simplifying the process and further preventing the PPf from contamination.

Accordingly, one embodiment of the present invention is a method for the production of an extract comprising a demineralised protein fraction depleted in β-lactoglobulin and enriched in the PPf comprising the steps of

-    adjusting the pH of an aqueous native protein dispersion to about 5.6 to 8.4, or to about 3.5 to 5.0
-    heating the aqueous native protein dispersion to about 70-95 °C for about 10 seconds to 60 minutes
-    removing at least a part of the formed solid large molecular weight aggregates with a diameter of at least 100 nm from the aqueous protein dispersion after heating and
-    collecting the remaining liquid fraction of the dispersion.

"Demineralised" means for the purpose of the present invention, a mineral content that is reduced by at least 25%, preferably by at least 50 %, more preferred by at least 75 % as compared to either sweet or acid whey. Hence, the dry matter of sweet or acid whey contains, on average, 8.8 % minerals, including 0.9 % calcium, 0.8 % sodium, 2.2 % potassium, 0.1 % magnesium, 0.7 % phosphorus and 2.0 % chloride.

In the context of the present invention, depleted in β-lactoglobulin means that the weight content of β-lactoglobulin relative to the total weight of proteins in the extract is at most 70 %, preferably at most 50 % even more preferred at most 20 % as compared to the weight content of β-lactoglobulin relative to the total weight of protein in the native globular protein solution.

Enriched in the PPf means that the weight content of the PPf relative to the total weight of protein in the extract is at least 2-fold, preferably at least 5-fold, even more preferred at least 10-fold increased as compared to the weight content of the PPf relative to the total weight of protein in the native globular protein dispersion.

The extract of the present invention may also be enriched in α-lactalbumin. Enriched in α-lactalbumin means that the weight content of α-lactalbumin relative to the total weight of protein in the extract is at least 1.2-fold, preferably at least 1.5-fold, even more preferred at least 2-fold increased as compared to the weight content of α-lactalbumin relative to the total weight of protein in the initial native globular protein dispersion.

The extract of the present invention is preferably prepared from demineralised globular protein dispersion, in particular from whey. The demineralised protein fraction is preferably a demineralised globular protein fraction, in particular a whey protein fraction.

In principle, the formed solid large molecular weight aggregates with a diameter of at least 100 nm can be removed from the aqueous whey protein dispersion after heating by any means that are known in the art. However, removal of large molecular weight aggregates can preferably be performed by sedimentation, centrifugation, filtration, microfiltration, or combinations of these methods. This removal step may be accompanied by a further pH adjustment.

Sedimentation has the advantage that the experimental equipment required is minimal and that this can be carried out with a minimum of energy input.

Centrifugation is a fast method that however involves energy input. Continuous centrifugation is a process that is already in use in factories, for example for white cheese making.

Filtration and microfiltration are well applicable for large scale production and are very reliable in removing large molecular weight aggregates.

By combining several of theses methods, their respective advantages may be combined.

For example, by applying a last step microfiltration procedure, a substantially complete removal of large molecular weight aggregates with a diameter of at least 100 nm can be achieved.

Preferably at least 90 %, more preferably 95 %, most preferred at least 99 % and ideally 100 % of the solid large molecular weight aggregates with a diameter of at least 100 nm are removed from the aqueous whey protein dispersion after heating.

The method of the present invention may also further comprise an ultrafiltration and/or evaporation step.

Ultrafiltration is a membrane filtration technique exploiting hydrostatic pressure to force a liquid through a semi-permeable membrane. Suspended solids and high molecular weight solutes are retained, while water and low molecular weight solutes cross the membrane. This separation process is used in industry and research to purify and concentrate solutions containing large molecular weight molecules ($10^3$ - $10^6$ Da), especially proteins. Ultrafiltration has the advantage of being well established in an industrial environment, allowing an efficient and, at the same time, gentle separation of large molecular weight proteins, which prevents stress-induced protein denaturation.

Evaporation is a gentle method that allows the concentration of the protein solution. Evaporation may be, for example, triggered by heating, e.g., to at least 40 °C, or preferably to at least 60° C. For example, the composition comprising the PPf may be dried to reduce the water content to below 10 wt.-%, preferably to below 5 wt.-%, even more preferred to below 2 wt.-% based on the weight of the total composition. This drying step has the advantage that the obtained PPf-enriched extract can be stored at high concentrations reducing the weight of the composition while maintaining its full activity. Low water activity provided by evaporation also ensures a higher stability of the product.

In the method of the present invention it is preferred if the aqueous native whey protein dispersion is heated about 15 minutes to about 85 °C. The pH is preferably adjusted to about 3.5 - 5.0, or to about 5.6 - 6.4, preferably to about 5.8 to 6.0, or to about 7.5 - 8.4 preferably to about 7.6 to 8.0, or to about 6.4 - 7.4 preferably to about 6.6 to 7.2.

During the extensive experiments, leading to the present invention, the inventors surprisingly noted that when adjusting the pH to very precise pH values ($\pm$0.1 pH units) before the heat treatment, spherical particles of whey proteins aggregates were obtained, which displayed a diameter of less than 1 $\mu$m. The optimal pH-value was found to be dependent on the concentration and composition of the starting material, e.g. WPI. This method displays the advantage of generating whey protein particles in the absence of any mechanical stress, e.g. shearing. The resulting particulation provides the advantage of an easy removal of the compounds forming these particles from the PPf-containing extract of the present invention.

The present findings show that pH and ionic strength are two important factors of the presented method. Accordingly, extensively dialyzed samples, which are strongly depleted of free cations like $Ca^{++}$, $K^+$, $Na^+$, $Mg^{++}$, tend to generate curds at a pH below 5.4 and soluble whey protein aggregates at a pH exceeding 6.8, after having applied the described heat treatment. Hence, only a rather narrow range of pH values is providing the type of solid whey protein particles required for the preparation of the PPf-extract. Similar whey protein particles are produced by using a pH value situated symmetrically below the isoelectric pH of whey, i.e from 3.5 to 5.0.

Negatively charged particles are obtained, if the pH is adjusted within the pH range from 5.6 to 6.4, more preferably from 5.8 to 6.0 for a low concentration (below 0.2g for 100 g of in initial whey protein powder) of divalent cations. The pH may be increased up to 8.4 depending on mineral content of the whey protein source (e.g. WPC or WPI). In particular, the pH may be adjusted from 7.5 to 8.4, preferably from 7.6 to 8.0, to obtain negatively charged particles in the presence of large amounts of free minerals. The pH may be adjusted from 6.4 to 7.4, preferably from 6.6 to 7.2, to obtain negatively charged particles in presence of moderate concentrations of free minerals.

Of course, particle charge can further be used as a tool to separate these particles from the whey extract containing the PPf of the present invention.

The pH is generally adjusted by the addition of an acid, which is preferably food grade, such as e.g. hydrochloric acid, phosphoric acid, acetic acid, citric acid, gluconic acid or lactic acid. When mineral content is high, the pH is generally adjusted by the addition of alkaline solution, which is preferably food grade, such as sodium hydroxide, potassium hydroxide or ammonium hydroxide.

For the method of the present invention, an essentially salt-free aqueous native whey protein dispersion is preferred. "Essentially salt free" means a salt content of 1g/L or below for a protein concentration of about 4 wt.-%. For example an aqueous whey protein solution may contain less than 2.5 wt.-% of its total dry mass in divalent cations, more preferably less than 2 wt.-%.

The native proteins, preferably native globular proteins, even more preferred whey proteins are present in the aqueous native protein dispersion in an amount of about 0.1 wt-% to 12 wt.-%, preferably about 0.1 wt.-% to 8 wt.-%, more preferably about 0.2 wt-% to 7 wt.-%, even more preferably about 1 wt.-% to 5 wt.-% on the basis of the total weight of the solution.

An aqueous whey protein dispersion may comprise whey from either bovine, or buffalo, or sheep, or goat, or horse, or camel sources or mixtures thereof.

One embodiment of the present invention is a composition comprising the PPf, in particular whey PPf, obtainable by the method of the present invention.

The whey PPf obtained by the method of the present invention differs from the PPf available in the prior art, in particular from those obtainable from milk, due to the fact that in the present invention, whey is used as starting material and a specific method is used.

The whey PPf obtained by the method of the present invention has an amino acid composition in percentage of the total amino acid composition as follows: about 6-9 % ASP, about 4-7 % THR, about 4-7 % SER, about 22-25 % GLU, about 9-12% PRO, about 0-3 % GLY, about 1,5-4,5 % ALA, about 4-7 % VAL, about 0-2 CYS, about 1-4 % MET, about 4-7 %ILE, about 7.5-10.5 % LEU, about 0-3 % TYR, about 6.7-9.7% LYS, about 1.5-4.5 % HIS, about 1-4 % ARG. This composition differs from the typical composition of the PPf obtained by a conventional method. In Table 1, the typical PPf-amino acid profiles corresponding to the conventional method (sample 1) and the whey PPf (the present invention, sample 2) are provided and can be compared.

Sample 1 was prepared from the same WPI using the conventional method as follows:

In essence, the conventional PPf was prepared according to the method proposed by Paquet, D. Nejjar, Y.,& Linden, G. (1988); Study of a hydrophobic protein fraction isolated from milk proteose-peptone. Journal of Dairy Science, 71, 1464-1471).

A Prolacta 90 was used as starting material. Prolacta 90 (428g) was reconstituted in 5 L of Milli-Q grade $H_2O$. A pH of 6.43 was measured for this solution, which was then adjusted to pH 7.00 by adjunction of about 15 mL of NaOH 1 N. The volume of this solution was adjusted to 6 L (the final protein concentration was 6% (w/w)) and equally distributed into six 1L-bottles, which were positioned for 30 min in a water bath set at 93°C to denature the proteins. A temperature of 90°C was reached inside the bottle after 20 min of incubation. At the end of incubation, the bottles were placed into an ice bath and cooled down to 20°C. Isoelectric precipitation of the proteinaceous compounds was performed by adjusting the pH to 4.6. Practically, the content of three 1L-bottles were pooled (pH 7.17) and the pH adjusted to 4.6 using about 88 mL of HCl 1 N. The other three 1L-bottles were processed identically. The resulting two acidified solutions were pooled, stored at 4 °C for 18h and equally distributed into six 1L-plastic bottles. After centrifugation of the bottles (60 min at 6°C, 5000 rpm/7200g, Sorval RC3C Plus fitted with a H 6000A rotor), the PPf-containing supernatants were recovered. Then, ammonium sulfate precipitation of the PPf was performed at half saturation (313 g/L) during 2h. The precipitates were recovered after centrifugation (60 min at 6°C and 5000 rpm using a Sorval RC3C Plus), pooled and redispersed in 350 mL of Milli-Q grade $H_2O$. The cloudy suspension/solution was dialyzed 4 times against 22 L of Milli-Q grade $H_2O$ using a Spectrapor membrane tubing with a MW cut-off of 1000 (Spectrum Laboratories inc.). After dialysis, the extract containing the PPf was centrifuged (60 min at 6°C and 5000 rpm) and the supernatant filtered (0.22 $\mu$m filter, GP Stericup® Express plus™ from Millipore) and freeze dried. The yield of the PPf was 6g (1.6 %) from a total whey protein load of 360g.

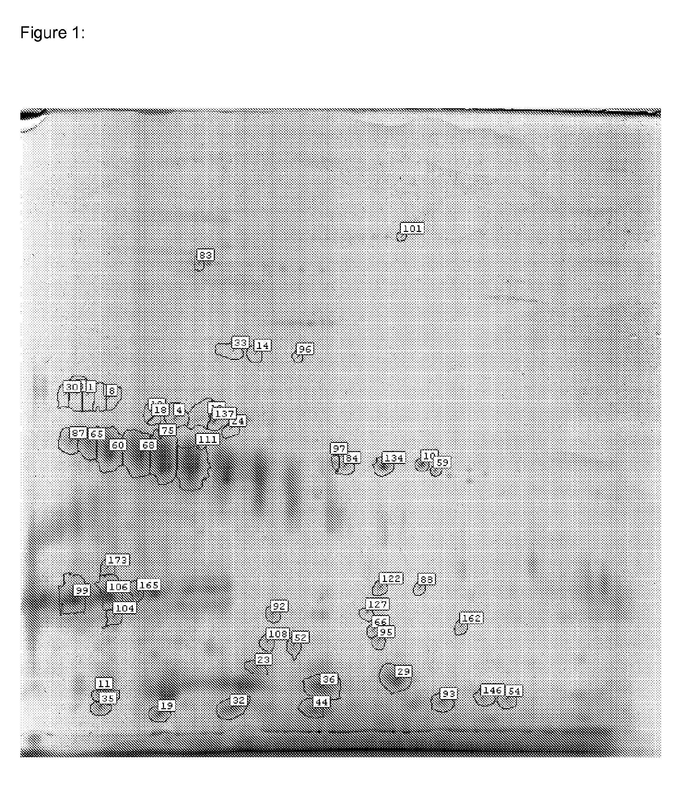

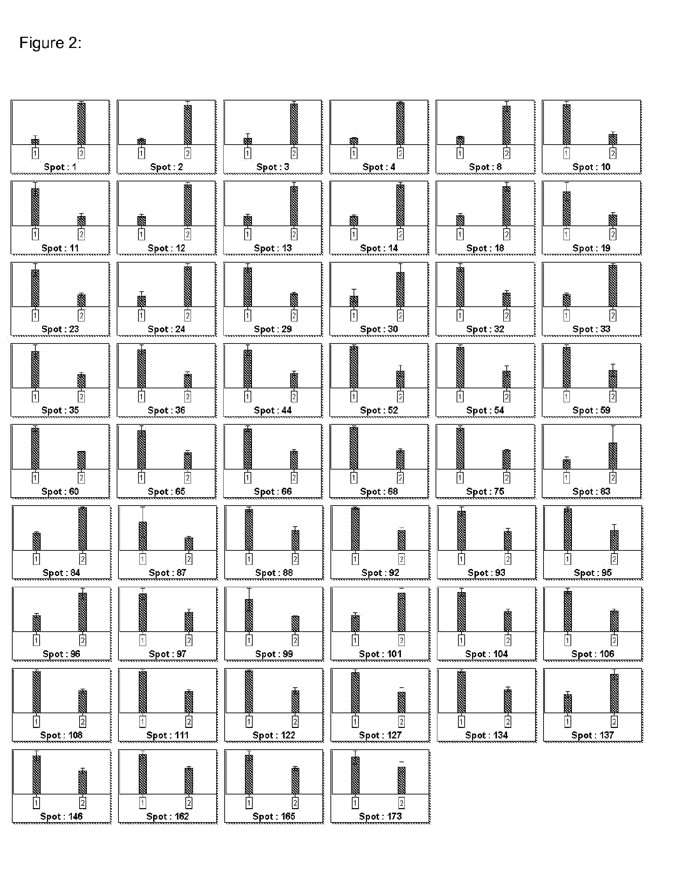

For example, the two following criteria allow to differentiate the two PPf: the amino acid profile (Table 1) and the protein profile as determined by 2D-PAGE (Figures 1 and 2).

Table 1: Amino acid composition of the conventional PPf (sample 1) and the whey protein PPf (sample 2), expressed either as g of each amino acid per 100 g powder, or in percentage of the total amino acid composition.

| g/100g sample | | | | % A.A. | | |
|---|---|---|---|---|---|---|
| A.A. | Sample 1 | Sample 2 | | A.A. | Sample 1 | Sample 2 |
| ASP | 10.0 | 6.2 | | ASP | 12.2 | 7.5 |
| THR | 4.1 | 4.8 | | THR | 5.0 | 5.7 |
| SER | 4.3 | 4.9 | | SER | 5.2 | 5.8 |
| GLU | 16.5 | 19.5 | | GLU | 20.2 | 23.4 |
| PRO | 5.0 | 8.8 | | PRO | 6.1 | 10.5 |
| GLY | 1.7 | 1.3 | | GLY | 2.1 | 1.6 |
| ALA | 2.0 | 2.4 | | ALA | 2.4 | 2.9 |
| VAL | 3.9 | 4.4 | | VAL | 4.8 | 5.3 |
| CYS | 1.80 | 0.19 | | CYS | 2.2 | 0.2 |
| MET | 1.35 | 1.98 | | MET | 1.7 | 2.4 |
| ILE | 5.1 | 4.7 | | ILE | 6.2 | 5.7 |
| LEU | 8.1 | 7.5 | | LEU | 9.9 | 9.0 |
| TYR | 2.4 | 1.3 | | TYR | 3.0 | 1.6 |
| PHE | 3.5 | 4.0 | | PHE | 4.3 | 4.8 |
| LYS | 7.6 | 6.9 | | LYS | 9.3 | 8.2 |
| HIS | 2.3 | 2.4 | | HIS | 2.9 | 2.8 |
| ARG | 2.0 | 2.1 | | ARG | 2.4 | 2.6 |
| Total: | 81.8 | 83.5 | | Total: | 100.0 | 100.0 |

2D-PAGE is a powerful method to analyze and compare complex protein mixtures. This method segregates proteins according to their charge, in the first dimension, and according to molecular weight, in the second dimension.
The present inventors have used this 2D-PAGE to analyze the differences existing between the PPf obtained using a conventional method and the PPf obtained using the present invention. The same WPI was used to produce both the PPf prepared according to the conventional method and the PPf prepared according to the present invention. The conventional PPf was prepared according to the method described by Paquet, D. Nejjar, Y.,& Linden, G. (1988); Study of a hydrophobic protein fraction isolated from milk proteose-peptone. Journal of Dairy Science, 71, 1464-1471). Figure 1 shows the 2D-PAGE protein profile of the PPf obtained according to the present invention. All the labelled protein spots of the 2D-Gel of Figure 1 differ qualitatively and/or quantitatively from the protein spots of the 2D-Gel generated by the conventionally-prepared PPf. Figure 2 shows a quantification of the observed differences.
Consequently, one embodiment of the present invention is a composition comprising the PPf from native whey protein dispersions obtainable by the method of the present invention. Analysis of the PPf-enriched extract was performed according to the following procedure:

- dissolve the equivalent of 250 μg protein from the protein solution, in particular the PPf, in 340 μl of a denaturing solution consisting of urea, thiourea, CHAPS, Tris, DTT, ampholytes, used at the final concentrations of 7 M, 2 M, 65 mM, 20 mM, 65 mM, 0.4 % (w/v), respectively, and of bromophenol blue for colouring,
- loading this sample onto a pH gradient immobiline strip from pH 3 to pH 10 on a 9 to 16 % acrylamide gel prepared with 1.5 M Tris buffer.
- applying a voltage of 300 volts for 11.6 h and then 5000 volts for 12.4 h across the immobiline strip gel to separate the proteins by charge,
- positioning the immobiline strip gel onto an acrylamide gradient gel ranging from 9 to 16 % acrylamide, in a buffer of 25 mM Tris/192 mM Glycine/0.1% SDS (w/v), pH 8.3.
- applying a 40 mA current across the gel overnight, to draw the proteins previously separated on the Immobiline strip gel into the acrylamide matrix and further to separate them according to size,
- visualizing the protein spots by Coomassie blue staining

allows the generation of a gel as depicted in figure 1.

The composition of the present invention may be used for a number of different purposes. However, since the resulting composition is a food-grade composition, it is particularly useful for the preparation of a food product, a food supplement, a nutrional and/or a pharmaceutical composition.

The fact that the composition of the present invention - in particular if it is prepared using bovine milk or whey as a starting material - contains substantially no fat, makes it very useful for the production of low-fat products.

The composition of the present invention may be used, e.g., as an emulsifier or as a foaming agent.

Typical further applications of the composition of the present invention is its use for the preparation of products such as creamers, in particular coffee creamers, foamed beverages such as cappuccino, coffee latte, chocolate, yoghurt, pasteurized UHT milk, sweet condensed milk, fermented milks, milk-based fermented products, milk chocolate, mousses, foams, emulsions, ice cream, acid drinks, carbonated drinks, fruit juices, agglomerated powders to prepare beverages, milk based powders, infant formulae, diet fortifications, pet food, tablets, dried oral supplements, wet oral supplements, health care nutrition formulas and cosmetic products.

The composition of the present invention may also be used for the extraction and/or stabilisation of hydrophobic or lipido-soluble components, such as bioactives, antioxidants or pigments from biological material such as plants, fruits, biological tissues or fluids, fermented products, cells cultures, bacteria, yeasts...

Products comprising the composition of the present invention are also comprised by the present invention and are preferably food products, food supplements, nutritional and/or pharmaceutical compositions or cosmetic compositions; and preferably creamers, in particular coffee creamers, foamed beverages, such as cappuccino, coffee latte, chocolate, yoghurt, pasteurized UHT milk, sweet condensed milk, fermented milk, milk-based fermented products, milk chocolate, mousse, foam, emulsion, ice cream, acid drinks, carbonated drinks, fruit juices, agglomerated powders to prepare beverages, milk based powders, infant formulas, diet fortifications, pet food, tablets, dried oral supplements, wet oral supplements, or a health care nutrition formulas.

It is clear to those skilled in the art that they can freely combine all features disclosed herein without departing from the disclosure of this document. Further advantages and features of the present invention are apparent from the following examples and figures.

Figure 1: 2D-PAGE of the PPf of the present invention.

Figure 2: Quantification of proteins labelled in the gel of figure 1.

Figure 3: NU-PAGE of the PPf of the present invention performed under denaturing and reducing conditions using Coomassie blue staining. Lane 1: Commercial WPI (Native proteins Prolacta 90 (Lactalis)); Lane 2: WPA concentrate; Lane 3: WPA microfiltration (MF) permeate; Lane 4: WPA MF permeate supernatant after centrifugation at pH 4.6; Lane 5: WPA MF permeate pellet after centrifugation at pH 4.6.

Figure 4: Emulsifying activity index (EAI) at pH 7.0 for a 0.5 wt% protein dispersion of WPI (Prolacta90 (Lactalis, Rétiers, France)), WPA microfiltration permeate and WPA microfiltration/ultrafiltration permeate at 25°C.

Figure 5: Foaming capacity of 0.1 wt% protein dispersion of WPI (Prolacta®90 (Lactalis, Rétiers, France)) or PPf-enriched extract MF permeate of the present invention at pH 6.3 and 25°C.

Figure 6: Foam volume stability at 25°C of 0.1 wt% protein dispersion of WPI (Prolacta 90 (Lactalis, Rétiers, France)), extract of the present invention MF and extract of the present invention MF/UF at pH 4.0 and after heat treatment at 85°C for 15 minutes.

Example 1: Extraction of a PPf-enriched fraction corresponding to the present invention:

68 kg of Prolacta 90 (Lot 500658, Lactalis, Rétiers, France) was dispersed in 1332 kg of soft water (containing 160 mg.L$^{-1}$ Na$^+$) at 15°C. It was maintained under constant stirring and recirculation for 1 hour in a 2000 L tank equipped with a pH probe. The resulting pH of the protein dispersion was 6.68 and the total solids content (TS) was 4.5%. The pH was then adjusted to 5.90±0.05 by addition of about 13 kg of 1 M HCl. This specific pH value was found to be the optimum for the formation of WPAs using soft water in a lab-scale environment (WPAs' average diameter: 250 nm; turbidity at 500 nm: >70). The optimal pH value was found to be very stable under these processing conditions. The Prolacta 90 dispersion was then pumped at a flow rate of 1000 L.h$^{-1}$ and heat treated using a plate heat-exchanger with a pre-heating temperature of 55°C followed by a heating step at 85°C, a holding time of 15 minutes and a cooling step to 4°C. The resulting WPA-containing whey dispersion (4.5% TS) was stored at 4°C.

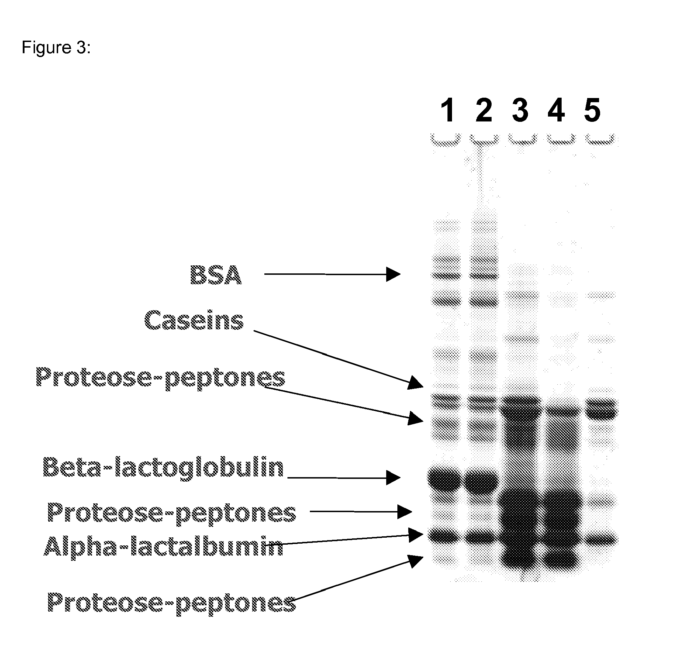

WPAs were then removed by microfiltration (MF) of 500 kg of WPA-containing whey dispersion using 2 Carbosep M14 ceramic/carbon membranes (pore size 0.14 micron) with a total surface of 6.8 m$^2$. The temperature of the module was set at a temperature between 8 and 11°C and the pressure at 2.3 bars. The permeate flux decreased from 180 l.h$^{-1}$ to 70 l.h$^{-1}$ after 3 hours of microfiltration. The final total solids (TS) of the retentate to be discarded was 20%, which essentially contains the WPA. The microfiltration permeate corresponding to the PPf of the present invention had a total solid content of about 0.28% and was further analysed by SDS-PAGE (Lane 3, Figure 3). This analysis showed that this PPf contained a mixture of α-lactalbumin, caseins and proteose peptones (Figure 3). A close look at the protein profile from native Prolacta 90 and the discarded WPA did not reveal major differences (Figure 3, Lanes 1-2). However, composition of the extract of the present invention exhibited enrichment in α-lactalbumin, PPf and caseins (Lane 3). The presence of the PPf was confirmed by the examination of supernatant and pellet after centrifugation at pH 4.6 (Lanes 4-5). Caseins and α-lactalbumin that precipitate at pH 4.6 were found in pellet whereas the PPf remained soluble in the supernatant. In an additional concentration step, the microfiltration permeate was further submitted to an ultrafiltration process in order to increase the TS from 0.28 to 20%, and the nitrogen content from 62 to 84.5% on the dry basis of the extract.

Example 2: Emulsifying properties

The emulsifying properties of the PPf of the present invention were evaluated at neutral pH, according to the method described by K.N. Pearce and J.E. Kinsella, J. Agric. Food Chem. 26 (1978), 716-723. A reference sample was taken (Prolacta 90, lot 500658, Rétiers, France). In addition, 2 extracts of the present invention were tested. The first extract (PPf) was the MF permeate having a protein content of 62% that is described in example 1. The second extract (PPf) was the subsequent UF extract characterized by a protein content of 84.5% that is also described in example 1. Sunflower oil was used to generate the emulsion (oil phase) and the protein content was set to 0.5 wt% in the aqueous phase. An amount of 12 mL of the aqueous phase was thereafter mixed with 4 mL of sunflower oil and homogenised using an Ultra Turrax® T25 equipped with a S25N-10G dispersing head (IKA-Werke, Staufen, Germany) rotating at 11,000 rpm for 1 minute. 50 mL of this emulsion were then mixed with 5 mL of a 0.1% SDS solution and the absorbance of this dispersion was measured at 500 nm using a Nicolet Evolution 100 spectrophotometer (Digitana, Yverdon-les-Bains, Switzerland) equipped with a 1 cm pathlength cuvette. The EAI (m$^2$.g$^{-1}$) was calculated at pH 4.0 and 7.0 according to:

$$EAI = 4.606Ad/\varphi Cl$$

Where A is the absorbance at 500 nm, d is the dilution factor, φ is the volume fraction of oil, C is the protein concentration (g.m$^{-3}$) and l is the pathlength of the cuvette (m). Experiments were duplicated.

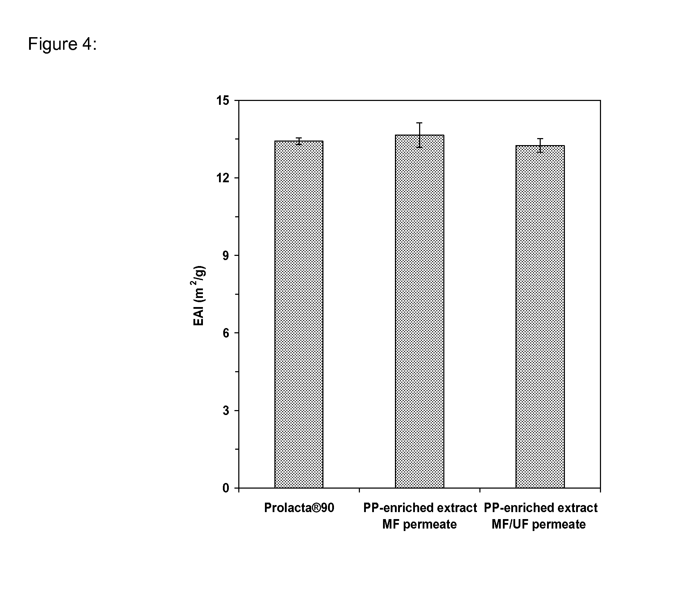

The EAI (Emulsifying Activity Index) are reported on figure 4. It can be clearly seen that the PPf-enriched extracts of the present invention exhibit an emulsifying activity that is equivalent to the starting material (WPI, Prolacta 90). This means that it is possible to stabilize the same amount of sunflower oil with the PPf-containing extracts of the present invention as with the WPI (Prolacta 90) that contains all major protein fractions of whey.

Example 3: Foaming properties

The PPf extracts obtained by microfiltration (MF) and by microfiltration/ultrafiltration (MF/UF) described under example 1, were used to determine the foaming properties of the extracts using the method described by C. Guillerme et al., J. Text. Stud. 24 (1993) 287-302. The principle is to foam a defined quantity of WPM dispersion by gas sparging through a porous sintered glass disk (porosity and gas flow are controlled). The foam generated rises along a cylindrical glass column where its volume is followed by image analysis using a CCD camera. The amount of liquid incorporated in the foam and the foam homogeneity are followed by measuring the conductance in the cuvette containing the liquid and at different heights in the column by means of electrodes. The foaming properties of the PPf extracts were measured by using the commercially available Foamscan™ apparatus (Teclis-ITConcept, Longessaigne, France). The PPf-enriched extract MF and MF/UF permeate was reconstituted at 0.1 wt% protein in MilliQ water and the foaming capacity and foam stability were determined at pH 6.3 and compared to those of the corresponding Prolacta 90 at the same protein concentration. To further test the foaming properties of the PPf extracts after heat treatment in acidic conditions, the above mentioned dispersions were acidified to pH 4.0 and heat treated at 85°C for 15 minutes before foaming experiment was carried out.

A volume of 20 mL of the protein dispersions was poured into the cuvette and sparging $N_2$ at 80 mL.min$^{-1}$. This flow rate was found to allow an efficient foam formation before strong gravitational drainage occurs. The porosity of the sintered glass disk used for testing these foaming properties allows formation of air bubbles having diameters between 10 to 16 $\mu$m. Bubbling was stopped after a volume of 110 cm$^3$ of foam was obtained. At the end of the bubbling, foam capacity (FC = volume of foam/volume of gas injected) was calculated. In addition, total foam volume was followed with time at $25\pm2$°C. All experiments were replicated.

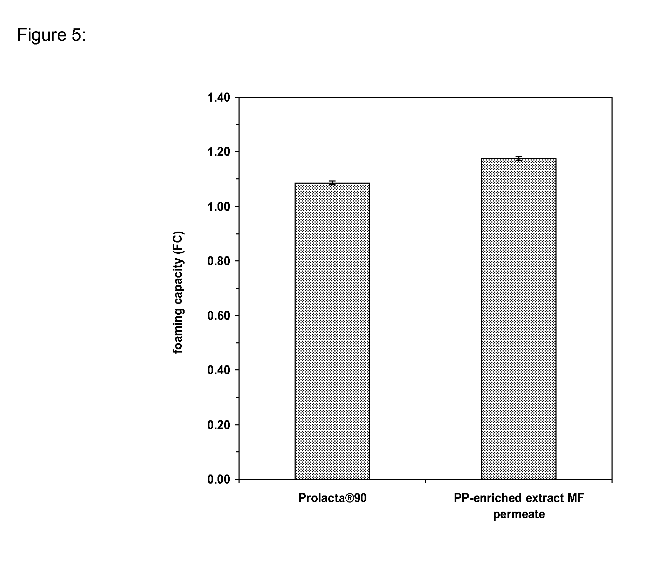

The foaming capacity, defined as the total volume of foam produced divided by the total volume of gas injected, of the PPf-enriched MF extract of the present invention was slightly higher to that of the corresponding Prolacta 90, showing that the PPf-enriched extract was as surface active as the combination of all major whey proteins (Figure 5).

Regarding the acidic heat stability, major whey milk fractions of the prior art are known to loose their foaming properties upon heating followed by acidification (LG Phillips, et al., J. Food Sci. 55 (1990), 1116-1119). This was not the case for the PPf-enriched extracts of the present invention. The Prolacta 90 dispersion at 0.1 wt% protein exhibited a significantly lower FC of $1.09\pm0.01$ compared to $1.18\pm0.03$ for the two PPf-enriched extracts dispersed at 0.1 wt%.

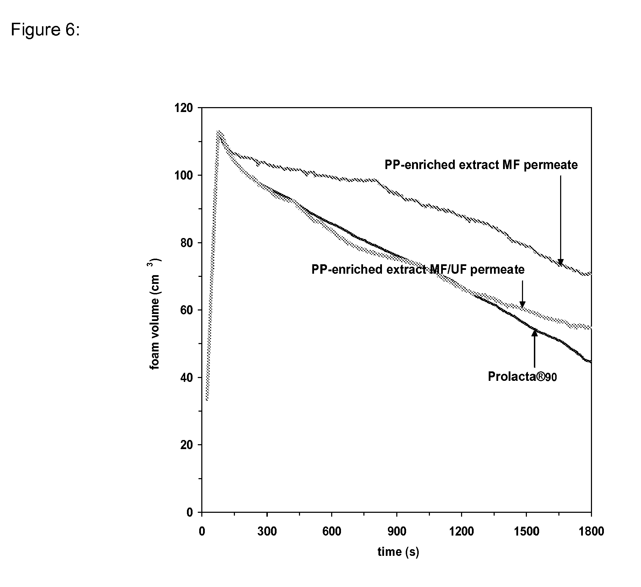

The foam volume stability of the foams obtained with 0.1 wt% protein dispersions of the extracts of the present invention and after heat treatment at 85°C for 15 minutes and pH adjustment at 4.0, was equivalent or even higher than what was obtained with Prolacta 90 (figure 6), showing again the acid- and heat-resistance of the extracts vs. major whey protein fractions.

**Claims**

1. Method for the production of an extract comprising a demineralised protein fraction depleted in β-lactoglobulin and enriched in a proteose peptone fraction (PPf) comprising the following steps:

   - adjustment of the pH of an aqueous native protein dispersion to about 5.6 to 8.4, or to about 3.5 to 5.0
   - heating the aqueous native protein dispersion to about 70-95 °C for about 10 seconds to 60 minutes
   - removing at least a part of the formed solid large molecular weight aggregates with a diameter of at least 100nm from the aqueous protein dispersion after heating and
   - collecting the remaining liquid fraction of the dispersion.

2. Method in accordance with claim 1, wherein the extract is a demineralised globular protein extract, in particular a whey extract and the demineralised protein fraction is a demineralised globular protein fraction, in particular a whey protein fraction.

3. Method in accordance with one of the preceding claims wherein the formed solid large molecular weight aggregates with a diameter of at least 100 nm are removed from the aqueous protein dispersion after heating by a method selected from the group consisting of sedimentation, centrifugation, filtration, microfiltration, or combinations of these methods.

4. Method in accordance with one of the preceding claims where at least 90%, preferably 95%, most preferred at least 99% of the solid large molecular weight aggregates with a diameter of at least 100 nm are removed from the aqueous protein dispersion after heating.

5. Method in accordance with one of the preceding claims wherein as a last step remaining solid large molecular weight aggregates with a diameter of at least 100nm are removed by microfiltration from the aqueous protein dispersion after completion of the heating process.

6. Method in accordance with one of the preceding claims further comprising an ultrafiltration and/or evaporation step.

7. Method in accordance with one of the preceding claims wherein the heating time period is about 15 minutes and the temperature is about 85 °C.

8. Method in accordance with one of the preceding claims wherein the pH is adjusted to about 3.5 - 5.0, or

to about 5.6 - 6.4, preferably to about 5.8 to 6.0, or
to about 7.5 - 8.4 preferably to about 7.6 to 8.0, or
to about 6.4 - 7.4 preferably to about 6.6 to 7.2.

9. Method in accordance with one of the preceding claims wherein the aqueous protein dispersion is essentially salt free.

10. Method in accordance with one of the preceding claims wherein proteins are present in the aqueous protein dispersion in an amount of about 0.1 wt-% to 12 wt.-%, preferably about 0.1 wt.-% to 8 wt.-%, more preferably about 0.2 wt-% to 7 wt.-%, even more preferably about 1 wt.-% to 5 wt.-% on the basis of the total weight of the dispersion.

11. Method in accordance with one of the preceding claims wherein the aqueous protein dispersion contains less than 2.5 wt.-% of its total dry mass in divalent cations, more preferably less than 2 wt.-%.

12. Method in accordance with one of the preceding claims wherein the aqueous protein dispersion comprises whey from bovine sources, buffalo, sheep, goat, horse camel or mixtures thereof.

13. Method in accordance with one of the preceding claims wherein the remaining liquid part of the dispersion is dried to reduce the water content to below 10 wt.-%, preferably below 5 wt.-%, even more preferred to below 2 wt.-% based on the weight of the total composition.

14. Composition comprising whey PPf obtainable by a method in accordance with one of claims 1-13.

15. Composition in accordance with claim 14 having an amino acid composition in percentage of the total amino acid composition as follows: about 6-9 % ASP, about 4-7 % THR, about 4-7 % SER, about 22-25 % GLU, about 9-12% PRO, about 0-3 % GLY, about 1,5-4,5 % ALA, about 4-7 % VAL, about 0-2 CYS, about 1-4 % MET, about 4-7 %ILE, about 7.5-10.5 % ILEU, about 0-3 % TYR, about 6.7-9.7% LYS, about 1.5-4.5 % HIS, about 1-4 % ARG.

16. Composition in accordance with claims 14-15 which after subjecting to the following procedure

- dissolve the equivalent of 250 $\mu$g protein from the protein solution, in particular the PPf, in 340 $\mu$l of a denaturing solution consisting of urea, thiourea, CHAPS, Tris, DTT, ampholytes, used at the final concentrations of 7 M, 2 M, 65 mM, 20 mM, 65 mM, 0.4 % (w/v), respectively, and of bromophenol blue for colouring,
- loading this sample onto a pH gradient immobiline strip from pH 3 to pH 10 on a 9 to 16 % acrylamide gel prepared with 1.5 M Tris buffer.
- applying a voltage of 300 volts for 11.6 h and then 5000 volts for 12.4 h across the immobiline strip gel to separate the proteins by charge,
- positioning the immobiline strip gel onto an acrylamide gradient gel ranging from 9 to 16 % acrylamide, in a buffer of 25 mM Tris/192 mM Glycine/0.1% SDS (w/v), pH 8.3.
- applying a 40 mA current across the gel overnight, to draw the proteins previously separated on the Immobiline strip gel into the acrylamide matrix and further to separate them according to size,
- by visualizing the gel's protein spots with Coomassie blue staining the generation of a gel similar to the one presented in figure 1 is obtained

17. Use of a composition in accordance with one of claims 14 - 16 for the preparation of a food product, a food supplement, a nutritional, a pharmaceutical and/or a cosmetic composition.

18. Use of a composition in accordance with one of claims 14 - 16 as emulsifier, as foaming agent, and/or for low fat products.

19. Use in accordance with one of claims 17-18 for creamers, in particular coffee creamers, foamed beverages such as cappuccino, coffee latte, chocolate, yoghurt, pasteurized UHT milk, sweet condensed milk, fermented milks, milk-based fermented products, milk chocolate, mousses, foams, emulsions, ice cream, acid drinks, carbonated drinks, fruit juices, agglomerated powders to prepare beverages, milk based powders, infant formulae, diet fortifications, pet food, tablets, dried oral supplements, wet oral supplements, health care nutrition formulas, cosmetic products.

20. Use of a composition in accordance with one of claims 14 - 16 for the extraction and/or stabilisation of hydrophobic or lipido-soluble components, such as bioactives, antioxidants or pigments from biological material such as plants, fruits, biological tissues or fluids, fermented products, cells cultures, bacteria, yeast.

Figure 1:

EP 2 098 122 A1

Figure 2:

Figure 3:

Figure 4:

Figure 5:

Figure 6:

Europäisches
Patentamt
European
Patent Office
Office européen
des brevets

# EUROPEAN SEARCH REPORT

Application Number

EP 08 10 1805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 1 079 604 A (GENVRAIN) 16 August 1967 (1967-08-16) | 1-20 | INV. A23J1/20 |
| Y | * page 1, column 2, line 90 - page 2, column 1, line 24; claims * | 1-20 | |
| X | US 1 470 896 A (VALKENBURG HERMON L VAN) 16 October 1923 (1923-10-16) * example 1 * | 1-20 | |
| X | BEZKOROVAINY A ET AL: "Proteose-peptone fractions of human and bovine milk" INTERNATIONAL JOURNAL OF BIOCHEMISTRY, PERGAMON, vol. 7, no. 12, 1 January 1976 (1976-01-01), pages 639-642, XP023411575 ISSN: 0020-711X [retrieved on 1976-01-01] * page 640, line 1 - line 10 * | 1-20 | |
| X | US 3 644 326 A (PIEN JEAN LUCIEN JOSEPH) 22 February 1972 (1972-02-22) * claims * | 1-20 | TECHNICAL FIELDS SEARCHED (IPC) A23J |
| X | GB 2 063 272 A (NORDSON CORP) 3 June 1981 (1981-06-03) * claims; example 1 * | 1-20 | |
| X | DE 199 06 379 A1 (HUS MANFRED [DE]; SPIEGEL THOMAS [DE]) 17 August 2000 (2000-08-17) * claims * | 1-20 | |
| X | US 2002/051843 A1 (BAKER LOIS A [US] ET AL) 2 May 2002 (2002-05-02) * claims * | 1-20 | |

-/--

The present search report has been drawn up for all claims

| Place of search | Date of completion of the search | Examiner |
|---|---|---|
| The Hague | 18 November 2008 | Bayrak, Sinasi |

**EP 2 098 122 A1**

## EUROPEAN SEARCH REPORT

Application Number

EP 08 10 1805

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE LA FUENTE M A ET AL: "Recent advances in the characterisation of heat-induced aggregates and intermediates of whey proteins" TRENDS IN FOOD SCIENCE AND TECHNOLOGY, ELSEVIER SCIENCE PUBLISHERS, GB, vol. 13, no. 8, 1 August 2002 (2002-08-01), pages 262-274, XP004395896 ISSN: 0924-2244 * the whole document * ----- | 1-20 | |

TECHNICAL FIELDS SEARCHED (IPC)

The present search report has been drawn up for all claims

| Place of search | Date of completion of the search | Examiner |
|---|---|---|
| The Hague | 18 November 2008 | Bayrak, Sinasi |

EPO FORM 1503 03.82 (P04C01)

**ANNEX TO THE EUROPEAN SEARCH REPORT**
**ON EUROPEAN PATENT APPLICATION NO.**

EP 08 10 1805

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2008

| Patent document cited in search report | | Publication date | Patent family member(s) | | Publication date |
|---|---|---|---|---|---|
| US 1079604 | A | | NONE | | |
| US 1470896 | A | 16-10-1923 | NONE | | |
| US 3644326 | A | 22-02-1972 | BE | 724386 A | 02-05-1969 |
| | | | DE | 1811341 A1 | 14-08-1969 |
| | | | FR | 1555757 A | 31-01-1969 |
| | | | GB | 1243988 A | 25-08-1971 |
| | | | LU | 57419 A1 | 04-03-1969 |
| | | | NL | 6816987 A | 03-06-1969 |
| | | | SE | 351777 B | 11-12-1972 |
| GB 2063272 | A | 03-06-1981 | GB | 2091596 A | 04-08-1982 |
| DE 19906379 | A1 | 17-08-2000 | AT | 239381 T | 15-05-2003 |
| | | | AU | 3145600 A | 04-09-2000 |
| | | | WO | 0048473 A1 | 24-08-2000 |
| | | | DE | 19964370 B4 | 11-05-2006 |
| | | | EP | 1154700 A1 | 21-11-2001 |
| | | | US | 6767575 B1 | 27-07-2004 |
| US 2002051843 | A1 | 02-05-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. Aschaffenburg.** *J. Dairy Res.,* 1945, vol. 14, 316-328
- **Girardet et al.** *J. Dairy Res.,* 1996, vol. 63, 333-350
- **Paquet, D. ; Nejjar, Y. ; Linden, G.** Study of a hydrophobic protein fraction isolated from milk proteose-peptone. *Journal of Dairy Science,* 1988, vol. 71, 1464-1471

- **K.N. Pearce ; J.E. Kinsella.** *J. Agric. Food Chem.,* 1978, vol. 26, 716-723
- **C. Guillerme et al.** *J. Text. Stud.,* 1993, vol. 24, 287-302
- **LG Phillips et al.** *J. Food Sci.,* 1990, vol. 55, 1116-1119